# EUROPÄISCHE PATENTSCHRIFT

(11) **EP 0 666 294 B1**
(45) Veröffentlichungstag und Bekanntmachung des Hinweises auf die Patenterteilung: **23.06.1999**
(21) Anmeldenummer: 95101393.7
(22) Anmeldetag: 02.02.1995
(51) Int. Cl.: C09D 11/10, C09D 17/00, C08G 8/28

(54) **Modifizierte Naturharzsäureester, Verfahren zu ihrer Herstellung und ihre Verwendung als Bindemittelharze in Druckfarben**
Modified resins of esterified resin acids, method for manufacturing the same and their use as binder in printing inks
Résines modifiées à base d'esters d'acides résiniques naturels, procédé pour les préparer et leur utilisation comme liant dans des encres d'imprimerie

(30) Priorität: 04.02.1994 DE 4403547
(43) Veröffentlichungstag der Anmeldung: 09.08.1995
(73) Patentinhaber: HOECHST AKTIENGESELLSCHAFT, 65926 Frankfurt am Main (DE)
(72) Erfinder: Bender, Albert, Dr., D-55130 Mainz (DE)
(74) Vertreter: Zounek, Nikolai, Dipl.-Ing.

(56) Entgegenhaltungen:
- EP-A- 0 041 838
- EP-A- 0 580 954
- EP-A- 0 619 331

## Beschreibung

Die Erfindung betrifft modifizierte Naturharzsäureester, sowie Verfahren zu deren Herstellung aus Naturharzen, Phenolen, Aldehyden, Veresterungs- und Modifizierungsmitteln in Gegenwart von Lithiumverbindungen. Die neuen Verbindungen können vorteilhaft als Bindemittelharze für Druckfarben für den Illustrationstiefdruck verwendet werden.

Im Illustrationstiefdruck werden überwiegend Toluol enthaltende Druckfarben eingesetzt. Derartige Druckfarben können bekanntlich durch Pigmentieren eines Firnisses hergestellt werden, der durch Auflösen geeigneter Bindemittelharze in Toluol unter Zusatz üblicher Hilfsstoffe gewonnen wird. Das Bindemittelharz hat dabei die Aufgabe, das Pigment auf dem Bedruckstoff zu verankern.

Im allgemeinen werden zur technischen Herstellung von Toluol enthaltenden Druckfarben zunächst Pigmentanreibungen oder Pigmentkonzentrate synthetisiert, die dann nach Verdünnen mit Toluol oder durch Auflacken mit weiteren Bindemittelsystemen die druckfertigen Farben ergeben. Bei der Herstellung dieser Zwischenstufen ist es besonders wichtig, dem Pigment in der Dispergierphase ausreichend Harz zur optimalen Benetzung zur Verfügung zu stellen, ohne jedoch eine zu hohe Viskosität zu erreichen. Ein Überschreiten der optimalen Viskosität kann die erwünschte Fließfähigkeit der Anreibung nachteilig beeinträchtigen oder sogar zu Inhomogenitäten führen. Andererseits bedingt eine Erniedrigung der Viskosität durch zu starkes Herabsetzen der Konzentration des Harzes eine unbefriedigende Dispergierwirkung. Aus wirtschaftlichen Gründen ist es demzufolge ganz besonders interessant, Druckfarben so herzustellen, daß sie bei möglichst niedrigem Gehalt an Bindemittelharzen eine trotzdem noch gute Verdruckbarkeit und drucktechnische Leistungsfähigkeit besitzen.

Als Bindemittelharze für Druckfarben werden Phenolharz-modifizierte Naturharzsäureester aus Naturharzen, α,β-olefinisch ungesättigten Verbindungen, Phenolen, Aldehyden, Veresterungs- und Modifizierungsmitteln eingesetzt. Zur Herstellung dieser Phenolharz-modifizierten Natursäureester werden üblicherweise Salze zweiwertiger Metalle als Katalysator benötigt. EP-A 0 548 506 beschreibt die Herstellung von öllöslichen Phenolharz-modifizierten Natursäureestern in Gegenwart von Magnesiumverbindungen. Weiterhin werden Calcium- oder Zinkverbindungen in der deutschen Patentanmeldung P 43 08 108.8 als Katalysatoren für die Modifizierung von Naturharzen mit Phenolen, Aldehyden und Polyolen vorgeschlagen. Derartige Systeme weisen in Toluol jedoch einen relativ steilen Verlauf der Viskosität mit der Konzentration auf, so daß sie für eine Verwendung in Pigmentanreibungen und -konzentraten nicht geeignet sind.

Alkaliverbindungen sind im Zusammenhang mit modifizierten Naturharzen in EP-A 0 477 449 aufgeführt, werden dort jedoch ausschließlich in Kombination mit Zink zur Neutralisation von Naturharzsäuren zu Resinaten eingesetzt. Es ist auch bereits beschrieben, Naturharze oder deren Derivate mit aliphatischen Carbonsäuren oder mit Säure-modifizierten Alkydharzen, Phenolen und Formaldehyd in Gegenwart saurer Katalysatoren zu erhitzen und anschließend das entstandene Polykondensat mit Metalloxiden oder -hydroxiden ins Resinat zu überführen (Derwent-Abstract Nr. 87-358757/51 (JP-A 260810/87). Bekanntlich führt die Verwendung von Resinaten als Bindemittel jedoch zu relativ harzreichen Farben.

In der nachveröffentlichten deutschen Patentanmeldung P 43 11 127.0 werden Alkaliverbindungen auch als Katalysator für die Umsetzung von Cyclopentadienverbindungen mit Naturharzsäuren, Phenolen und Aldehyden vorgeschlagen. Die erhaltenen unveresterten Phenolharz-modifizierten Cyclopentadienharze sind als Bindemittel für den Offsetdruck gut geeignet, nicht jedoch für den Illustrationstiefdruck.

Ferner ist bekannt, Naturharze mit Phenol und Formaldehyd sowie Glycerin in Gegenwart von Magnesiumoxid, und basischen Lithiumverbindungen zu öllöslichen Harzen umzusetzen (Chemical Abstract Nr. 120:324917 und 120:299598 (CN-A 1 077 462 und CN-A 1 077 461)). Diese Bindemittelharze sind zwar zum Dispergieren von Pigmenten für Offsetdruckfarben, nicht jedoch zum Dispergieren von Pigmenten in Illustrationstiefdruckfarben geeignet (Vergleichsbeispiel 2).

Die Entwicklung besonders schnell laufender Druckmaschinen und der Trend, neben gestrichenen Papieren zunehmend auch nichtgestrichene Papiere mit erhöhter Saugfähigkeit zu bedrucken, stellt besonders hohe Anforderungen an die Qualität von Bindemittelharze für den Illustrationstiefdruck. Insbesondere müssen sie dem Farbfilm einen guten Stand auf dem Bedruckstoff verleihen. Keinesfalls sollen Bindemittelharze zusammen mit Pigment in das Innere diffundieren, da dies mit Glanzverlust und verringerter Scheuerfestigkeit einhergeht. Mit den bekannten Bindemittelharzen können die gestiegenen Anforderungen nicht immer befriedigend erfüllt werden.

Der vorliegenden Erfindung lag somit die Aufgabe zugrunde, neue Bindemittelharze verfügbar zu machen, die in Toluol einen relativ flachen Verlauf der Viskosität mit der Konzentration aufweisen, die die Herstellung von für den Illustrationstiefdruck geeigneten Festkörper-armen Druckfarben mit hohem Glanz und mit einem geringen Durchschlagen der Farbe beim Bedrucken ermöglichen.

Die Aufgabe konnte dadurch gelöst werden, daß man bei der Herstellung von Druckfarbenharzen für den Illustrationstiefdruck auf der Basis Phenolharz-modifizierter Naturharzsäureester als Kondensationskatalysatoren Lithiumverbindungen einsetzt.

Gegenstand der Erfindung sind daher Toluol-lösliche modifizierte Naturharzsäureester, herstellbar durch Umsetzung von mindestens jeweils einer Verbindung aus den Substanzgruppen
A) Naturharze und Naturharzsäuren,
B) einkernige und mehrkernige Phenole, die gegenüber Oxoverbindungen mehrfachfunktionell sind,
C) Aldehyde und Aldehydacetale,
D) Alkohole mit mindestens zwei Hydroxylgruppen sowie gegebenenfalls von weiteren Verbindungen aus den Substanzgruppen
E) α,β-ethylenisch ungesättigte Carbonsäuren und deren Anhydride,
F) Fettsäuren und Fettsäureester,
G) ethylenisch ungesättigte Monomere,
H) ethylenisch ungesättigte Kohlenwasserstoffharze in Gegenwart von
l) Lithiumverbindungen
bei einer Temperatur von 100 bis 300 °C, vorzugsweise 130 bis 280 °C, unter Wasserabspaltung.

Als Verbindungen der Substanzgruppen A) bis I) finden vorzugsweise Verwendung:
A) Naturharze oder Naturharzsäuren, vorzugsweise Kolophonium, Wurzelharz, Tallharz sowie disproportioniertes oder partiell hydriertes oder dimerisiertes Naturharz beliebiger Provenienz,
B) Einkernige oder mehrkernige Phenole, die gegenüber Oxoverbindungen mehrfachfunktionell sind, insbesondere Phenol, (C₁-C₁₂)-Alkylphenole, Aryl- oder Aralkylphenole, Kresole, 1 ,3,5-Xylenole, Isopropyl-, p-tert.Butyl-, Amyl-, Oktyl-, Nonylphenol, Diphenylolpropan, Phenylphenol, Cumylphenol, sowie Additionsprodukte aus Phenolen und ethylenisch ungesättigten Monomeren, vorzugsweise α-Methylstyrol, α-Chlorstyrol, Vinyltoluol, Pinen, Cyclopentadien,
C) Aldehyde oder Aldehydacetale, vorzugsweise aliphatische (C₁-C₇)-Aldehyde, insbesondere Formaldehyd in seinen verschiedenen monomeren, oligomeren und polymeren Formen, Acetaldehyd, Butyraldehyd, Isobutyraldehyd, ferner Benzaldehyd, Furfurol, Glyoxal,
D) mindestens zwei Hydroxylgruppen enthaltende Veresterungsmittel, vorzugsweise polyfunktionelle Alkohole, insbesondere bifunktionelle, beispielsweise Glykole, oder trifunktionelle, beispielsweise Trimethylolethan, Trimethylolpropan, Glycerin, oder tetrafunktionelle, beispielsweise Pentaerythrit, oder pentafunktionelle, beispielsweise dimerisiertes Trimethylolpropan, oder hexafunktionelle Alkohole, beispielsweise dimerisiertes Pentaerythrit,
E) α,β-ethylenisch ungesättigte Carbonsäuren oder deren Anhydride, insbesondere Fumarsäure, Maleinsäure, Maleinsäureanhydrid, Itakonsäure, Zimtsäure, Acrylsäure, Methacrylsäure,
F) Fettsäuren, vorzugsweise tierische, pflanzliche oder durch Raffination gewonnene Fettsäuren, ferner Fettsäureester, beispielsweise Fettsäureglycerinester, insbesondere in Form von vegetabilischen oder tierischen Ölen, beispielsweise Tallöl, Baumwollsaatöl, Sojaöl, Leinöl, Holzöl, Fischöl, Kokosfett, hydriertes Kokosfett,
G) ethylenisch ungesättigte Monomere, insbesondere Styrol, α-Methylstyrol, Inden,
H) ethylenisch ungesättigte Kohlenwasserstoffharze, vorzugsweise Polymere oder Oligomere aus einfach und/oder mehrfach ethylenisch ungesättigten (C₅-C₉)-Kohlenwasserstoffen, insbesondere aus der Gruppe Isopren, Cyclopentadien, Inden, Cumaron, Styrol, oder Copolymerisate von ethylenisch ungesättigten Kohlenwasserstoffharzen mit Naturharzen oder Naturharzsäuren,
I) Lithiumverbindungen, vorzugsweise Oxide, Hydroxide, Carbonate, Acetate.

Gegenstand der Erfindung ist auch die Herstellung von Toluol-löslichen Phenolharz-modifizierten Naturharzsäureestern durch Umsetzung der Komponenten A) bis I). Dabei beträgt der Anteil der einzelnen Komponenten, bezogen auf die Gesamtmenge der eingesetzten Komponenten,
30 bis 95 Gew.-%, vorzugsweise 40 bis 90 Gew.-%, insbesondere 50 bis 80 Gew.-%, Naturharze oder Naturharzsäuren aus der Substanzgruppe A),
1 bis 45 Gew.-%, vorzugsweise 5 bis 40 Gew.-%, insbesondere 10 bis 35 Gew.-%, phenolische Komponenten aus der Substanzgruppe B),
1 bis 20 Gew.-%, vorzugsweise 3 bis 10 Gew.-%, insbesondere 5 bis 8 Gew.-%, Aldehyde oder Aldehydacetale aus der Substanzgruppe C),
bei einem Molverhältnis der Phenolkomponente B) zur Aldehydkomponente C), das vorzugsweise im Bereich von 1:0,9 bis 1:4,5, insbesondere 1:1 bis 1:2,5 liegt,
oder anstelle der Komponenten aus den Substanzgruppen B) und C) oder anteilig mit diesen, vorzugsweise bis zu 65 Gew.-%, aus Verbindungen der Substanzgruppen B) und C) separat hergestellte Kondensationsprodukte, vorzugsweise Phenolresole,
1 bis 20 Gew.-%, vorzugsweise 3 bis 15 Gew.-%, insbesondere 4 bis 10 Gew.-%, Polyolkomponenten aus der Substanzgruppe D),
0 bis 20, vorzugsweise 2 bis 10 Gew.-%, α,β-ethylenisch ungesättigte Carbonsäuren oder deren Anhydride aus der Substanzgruppe E),
0 bis 40 Gew.-%, vorzugsweise 1 bis 10 Gew.-%, α,β-ungesättigte Fettsäuren oder Fettsäureester aus der Substanzgruppe F),
0 bis 30 Gew.-%, vorzugsweise 1 bis 25 Gew.-%, insbesondere 2 bis 10 Gew.-%,
ethylenisch ungesättigte Monomere aus der Substanzgruppe G),
0 bis 30 Gew.-%, vorzugsweise 1 bis 25 Gew.-%, insbesondere 2 bis 10 Gew.-%, ethylenisch ungesättigte Kohlenwasserstoffharze aus der Substanzgruppe H),
0,01 bis 5 Gew.-%, vorzugsweise 0,1 bis 2 Gew.-%, insbesondere 0,3 bis 1,5 Gew.-% Lithiumverbindungen, berechnet als LiOH, aus der Substanzgruppe l).

Zur Herstellung der erfindungsgemäß modifizierten Naturharzsäureester wird vorzugsweise geschmolzenes Naturharz vorgelegt, dem zur Harzmodifizierung α,β-olefinisch ungesättigte Carbonsäuren, Fettsäuren, ethylenisch ungesättigte Monomere oder ethylenisch ungesättigte Kohlenwasserstoffharze zugegeben werden können. Vorzugsweise besitzt das aus diesen Komponenten bestehende Reaktionsgemisch, das vor Zugabe der Lithiumverbindung vorgelegt wird, eine Säurezahl oberhalb von 80 mg KOH/g, insbesondere oberhalb von 100 mg KOH/g. Dann werden Lithiumverbindung, Polyol, Phenol und Aldehyd in das vorgelegte Reaktionsgemisch eingetragen. Anstelle von Phenol und Aldehyd oder auch anteilig mit diesen kann auch ein separat nach bekannten Methoden aus Phenolen und Aldehyden in Gegenwart basischer Katalysatoren bei einer Temperatur von 50 bis 160 °C, vorzugsweise 60 bis 100 °C, bei Normaldruck oder erhöhtem Druck hergestelltes Kondensationsprodukt, vorzugsweise Phenolresol, eingesetzt werden. Danach wird die Kondensation im Temperaturbereich von ca. 130 bis 160 °C begonnen. Wird das Resol erst in der Schmelze aus den Komponenten Phenol und Aldehyd in situ hergestellt, wird üblicherweise unter einem Druck von bis zu 10 bar gearbeitet. Bei ausschließlicher Verwendung eines vorgefertigten Resols wird vorzugsweise drucklos gearbeitet. Anschließend wird unter Destillation des Reaktionswassers auf Temperaturen von 200 bis 280 °C erhitzt.

Das bei der Kondensationsreaktion und der Naturharzsäureveresterung entstehende Wasser kann unter Normaldruck abdestilliert werden. Es wird jedoch vorzugsweise im Temperaturbereich von 200 bis 280 °C insbesondere 220 bis 270 °C, kontinuierlich durch azeotrope Destillation unter Mitverwendung eines zur Azeotropbildung mit Wasser befähigten inerten organischen Lösungsmittels oder durch Destillation im Vakuum bei einem Druck von 0,1 bis 1000 mbar, vorzugsweise 100 bis 900 mbar, entfernt. Die letztgenannten Maßnahmen führen zu einer Verringerung der Reaktionszeit.

Als inerte Schleppmittel, die bei der Herstellung erfindungsgemäßer Harze zugesetzt werden können, kommen vorzugsweise gesättigte aliphatische oder aromatische Kohlenwasserstoffe infrage, deren Siedetemperaturen unter Normaldruck vorzugsweise oberhalb von 100°C liegen, beispielsweise Alkane, insbesondere Hexan, Decan, Gemische von aliphatischen Kohlenwasserstoffen, wie sie beispielsweise in Benzin vorliegen oder in entsprechenden Mineralölfraktionen, ferner vorzugsweise Toluol oder Xylol. Die Schleppmittel werden in Mengen von vorzugsweise 0,01 bis 20 Gew.-%, bezogen auf die Gesamteinwaage, eingesetzt.

Bei dem erfindungsgemäßen Syntheseverfahren wird der Fortgang der Kondensationsreaktion anhand der Säurezahl des Reaktionsgemisches verfolgt. So kann die Säurezahl des Harzgemisches anfangs vorzugsweise bis zu 200 mg KOH/g Harz betragen, ermittelt nach den üblichen Methoden. Sie fällt mit fortschreitender Umsetzung unter Wasserabspaltung fortlaufend ab. Die Veresterungsreaktion wird solange fortgesetzt, bis die erfindungsgemäße Umsetzung das gewünschte Endstadium erreicht hat und die Säurezahl auf Werte von < 50, vorzugsweise < 40 mg KOH/g Harz abgesunken ist. Wird die Reaktion drucklos oder mittels azeotroper Destillation durchgeführt, werden flüchtige Anteile, gegebenenfalls einschließlich des Schleppmittels, durch Destillation, zuletzt unter Vakuum, aus dem Reaktionsprodukt entfernt.

Da sich Naturharze verschiedener Provenienz hinsichtlich ihrer Zusammensetzung unterscheiden können, beispielsweise unterschiedliche Mengen an Terpenen ohne Carboxylgruppe enthalten oder eine unterschiedliche Isomerenverteilung der Harzsäuren aufweisen, können bei gleicher Rezeptur auch unterschiedliche Produkteigenschaften, beispielsweise bezüglich der Viskosität, resultieren. Die Rezeptur kann dann jedoch durch geringe Änderung der Komponentenkonzentration dem jeweiligen Naturharz angepaßt werden.

Das Molekulargewicht der erfindungsgemäßen Harze kann durch Gelpermeationschromatographie der Harzlösungen in Tetrahydrofuran (THF) an Polystyrolschaum in einem Permeationsmeßgerät nach bekannten Methoden ermittelt werden. Das mittlere Molekulargewicht (Gewichtsmittel M_{w}) der erfindungsgemäßen Harze liegt gemäß den erhaltenen Meßergebnissen vorzugsweise bei Werten von M_{w} > 5000 und ist nach oben nicht kritisch begrenzt. Besonders bevorzugt liegt das mittlere Molekulargewicht M_{w} jedoch in einem Bereich von 20.000 und 150.000, insbesondere 50.000 und 120.000.

Zur Bestimmung der Viskositäten werden beispielsweise die 25 Gew.-%igen toluolischen Lösungen mit einem üblichen Rotationsviskosimeter bei 23 °C vermessen. Die Viskositäten liegen vorzugsweise in einem Bereich von 3 bis 100 mPa·s, vorzugsweise von 4 bis 50 mPa·s.

Wie bei der Herstellung phenolharzmodifizierter Naturharzsäureester allgemein üblich, können zur Optimierung der erforderlichen Lösungsviskositäten den Harzschmelzen weitere Verbindungen wie Kolophonium, Kolophoniumester, Resinate, weitere phenolharzmodifizierte Kolophoniumharze oder hochsiedene Mineralöle in untergeordneten Mengen zugesetzt werden.

Erfindungsgemäß modifizierte Naturharzsäureester mit einem deutlich höherem Molekulargewicht werden insbesondere bei Entfernung des Reaktionswassers durch Azeotrop- oder Vakuumdestillation erhalten. Die Steigerung des Molekulargewichts ist besonders dann erwünscht, wenn Bindemittelharze hergestellt werden sollen, die in Toluol hohe Viskositäten erreichen. Mit derartigen Bindemitteln formulierte Farben können festkörperarm aufgebaut werden.

Da mit anderen einwertigen Kationen wie Natrium oder Kalium auch bei Entfernung des Reaktionswassers durch Azeotrop- oder Vakuumdestillation keine Steigerung des Molekulargewichts erreicht werden kann (Vergleichsbeispiel 1), ist dieses vorteilhafte Verhalten bei der Katalyse durch Lithiumverbindungen als außerordentlich überraschend zu beurteilen.

Ebenfalls überraschend ist es, daß sich durch Variation der Konzentration der Lithiumverbindungen bei der Polykondensation die Viskosität der resultierenden Harze gezielt steuern läßt. Dabei nimmt die Viskosität gewöhnlich mit steigender Konzentration der Lithiumverbindungen zu (Beispiele 9 und 10).

Die erfindungsgemäßen Bindemittelharze zeichnen sich außerdem vorteilhaft durch einen vergleichsweise flachen Viskositätsverlauf beim Verdünnen in Toluol aus, ihre Viskosität nimmt also auch bei steigendem Harzgehalt nur wenig zu. Dies macht sie insbesondere auch überlegen gegenüber Bindemittelharzen, die zweiwertige Metallkationen wie Calcium oder Zink enthalten, wie sie beispielsweise in der deutschen Patentanmeldung P 43 08 108.8 beschrieben sind. Dieses unterschiedliche Verhalten von Harzen, die Lithiumionen enthalten im Vergleich zu solchen, die Calciumionen enthalten, ist als außerordentlich überraschend zu bezeichnen.

Weiterer Gegenstand der Erfindung ist die Verwendung der erfindungsgemäßen Harze als Bindemittelharze in Pigmentanreibungen und -konzentraten sowie in Druckfarben vorzugsweise für den Illustrationstiefdruck mit Toluol. Die erfindungsgemäßen Harze weisen eine ausgezeichnete Verträglichkeit mit anderen Bindemitteln, beispielsweise mit Naturharzsäureestern des Standes der Technik, Resinaten oder Kohlenwasserstoffharzen auf. Sie besitzen darüber hinaus ein ausgezeichnetes Benetzungsverhalten für die im Illustrationstiefdruck verwendeten Pigmente.

Die Toluol enthaltenden Tiefdruckfarben werden nach den üblichen Methoden formuliert. Dazu wird das geeignete Bindemittelharz in Toluol gelöst und dieser Firnis pigmentiert oder eine vorab hergestellte Pigmentanreibung mit Toluol verdünnt. Als Zuschlagstoffe können die sonst üblichen, beispielsweise Füllstoffe, wie Calciumcarbonat, oder grenzflächenaktive Mittel zur Verbesserung der Pigmentdispersion, wie Lecithin, oder Wachse zur Verbesserung der Scheuerfestigkeit, mitverwendet werden.

Die Erfindung wird durch die nachfolgenden Beispiele näher erläutert. Die in den Beispielen angegebenen Teile und Prozente beziehen sich auf das Gewicht, soweit nicht anders vermerkt.

### Beispiel 1

Herstellung eines mit Maleinsäureanhydrid modifizierten Phenolharz-modifizierten Naturharzsäureesters unter kontinuierlicher Destillation des Reaktionswassers bei Normaldruck

In einem heizbaren 2l-Mehrhalskolben mit Rührwerk, Thermometer, Tropftrichter, absteigendem Kühler und Einfüllrohr werden unter einer Stickstoffatmosphäre 967 g handelsübliches Kolophonium, das auch als Naturharz oder Naturharzsäure bezeichnet wird, und 48 g Maleinsäureanhydrid eine Stunde bei 160 °C erhitzt. Dann werden bei dieser Temperatur 5 g Lithiumhydroxid, 133 g Pentaerythrit, und 16 g Glycerin zugegeben. Sodann werden 121 g eines wäßrigen Phenol-Formaldehyd-Kondensationsprodukts (70 %ig in Wasser, Viskosität 350 mPa·s) innerhalb von einer Stunde zugetropft. Dabei beginnt bereits Wasser abzudestillieren. Dann wird auf 255 °C erhitzt unter ständiger Destillation von Wasser. Sobald die Säurezahl unter 35 mg KOH/g Harz gesunken ist, wird der Ansatz 30 Minuten bei 100 mbar evakuiert. Nach Aufheben des Vakuums mit Stickstoff werden 1156 g eines spröden, pulverisierbaren Harzes mit dem Erweichungspunkt 146 °C erhalten. Eine 25 %ige Lösung in Toluol besitzt bei 23 °C eine Viskosität von 5 mPa·s. Durch Gelpermeationschromatographie wird ein mittleres Molekulargewicht von 22500 ermittelt. Die Reaktionszeit zur Herstellung beträgt 14 Stunden.

### Beispiel 2

Herstellung eines Phenolharz-modifizierten Naturharzsäureesters unter kontinuierlicher Destillation des Reaktionswassers bei Normaldruck

In einem heizbaren 2l-Mehrhalskolben mit Rührwerk, Thermometer, Tropftrichter, Rückflußkühler und Einfüllrohr werden unter einer Stickstoffatmosphäre 900 g handelsübliches Kolophonium, 63 g Nonylphenol, 116 g Diphenylolpropan und 83 g Glycerin geschmolzen. In die 100 °C heiße Schmelze werden sodann 6,5 g Lithiumhydroxid und anschließend 78 g Paraformaldehyd eingetragen. Dann wird die Mischung unter Rühren 30 min homogenisiert. Danach wird die Heizung auf eine Temperatur von 130 °C geregelt, so daß Wasser im Rückflußkühler zu kondensieren beginnt. Nach 2 Stunden wird der Kühler mit einer Destillationsvorrichtung kombiniert und Wasser abdestilliert. Dabei wird die Temperatur kontinuierlich bis auf 250 °C gesteigert unter ständigem Abdestillieren von Wasser. Der Fortgang der Reaktion wird anhand der Säurezahl des Produkts bestimmt. Sobald diese auf 25 mg KOH/g Harz gefallen ist, ist die Wasserabspaltung weitgehend beendet. Flüchtige Anteile werden im Vakuum innerhalb von 10 min bei 100 mbar abdestilliert. Nach Druckausgleich mit Stickstoff wird die Schmelze entleert, die nach dem Abkühlen 1055 g eines spröden, pulverisierbaren Harzes mit einem Erweichungspunkt von 135 °C ergibt. Eine 25 %ige Lösung in Toluol weist bei 23 °C eine Viskosität von 4 mPa·s auf. Durch Gelpermeationschromatographie wird ein mittleres Molekulargewicht von 21500 ermittelt. Die Reaktionszeit zur Herstellung beträgt 8 Stunden.

### Beispiel 3

Herstellung eines Phenolharz-modifizierten Naturharzsäureesters unter kontinuierlicher Azeotropdestillation des Reaktionswassers, wobei die Rezeptur des Beispiels 2 verwendet wird.

In einem heizbaren 2l-Mehrhalskolben mit Rührwerk, Thermometer, Tropftrichter, Rückflußkühler und Einfüllrohr werden unter einer Stickstoffatmosphäre 900 g handelsübliches Kolophonium, 63 g Nonylphenol, 116 g Diphenylolpropan und 83 Glycerin geschmolzen. In die 100 °C heiße Schmelze werden sodann 6,5 g Lithiumhydroxid und anschließend 78 g Paraformaldehyd eingetragen. Dann wird die Mischung unter Rühren 30 min homogenisiert. Danach wird die Heizung auf eine Temperatur von 130 °C geregelt, so daß Wasser im Rückflußkühler zu kondensieren beginnt. Nach 2 Stunden wird der Kühler mit einem Azeotropwasserabscheider kombiniert und Wasser im Umlauf mit Xylol abdestilliert. Dabei wird die Temperatur kontinuierlich auf 250 °C gesteigert und bei Erreichen von 200 °C weitere 50 g Xylol zugegeben unter ständigem Abdestillieren von Wasser als Azeotrop mit Xylol. Der Fortgang der Reaktion wird anhand der Säurezahl des Produkts bestimmt. Sobald diese auf 25 mg KOH/g Harz gefallen ist, ist die Wasserabspaltung weitgehend beendet. Das in der Schmelze befindliche Lösungsmittel wird zunächst unter Normaldruck 30 min abdestilliert. Flüchtige Anteile werden im Vakuum innerhalb von 10 min bei 100 mbar abdestilliert. Nach Druckausgleich mit Stickstoff wird die Schmelze entleert, die nach dem Abkühlen 1058 g eines spröden, pulverisierbaren Harzes mit einem Erweichungspunkt von 145 °C ergibt. Eine 25 %ige. Lösung in Toluol weist bei 23 °C eine Viskosität von 17 mPa·s auf. Durch Gelpermeationschromatographie wird ein mittleres Molekulargewicht von 96500 ermittelt. Die Reaktionszeit zur Herstellung beträgt 8 Stunden.

### Vergleichsbeispiel 1

Man arbeitet wie in Beispiel 3 angegeben mit der Abänderung, daß die Lithiumhydroxidmenge durch die äquivalente Menge (11,3 g) Natriumhydroxid ersetzt wird. Das erhaltene Produkt ist vergleichsweise niederviskos und weist 25 %ig in Toluol gelöst, bei 23 °C eine Viskosität von lediglich 3,5 mPa·s auf.

### Beispiel 4

Herstellung eines Phenolharz-modifizierten Naturharzsäureesters unter kontinuierlicher Vakuumdestillation des Reaktionswassers

Man verfährt wie in Beispiel 3 angegeben mit der Abänderung, daß ab einer Reaktionstemperatur von 200 °C das Reaktionswasser bei einem Druck von 700 mbar abdestilliert wird. Das nach einer Reaktionszeit von 8 Stunden erhaltene Produkt hat als 25%ige Lösung in Toluol bei 23 °C eine Viskosität von 13 mPa·s.

### Beispiel 5

Herstellung eines Phenolharz-modifizierten Naturharzsäureesters mit in-situ Resolbildung in der Schmelze unter Druck

In einem heizbaren 2I-Mehrhalskolben mit Rührwerk, Thermometer, Tropftrichter, Rückflußkühler und Einfüllrohr werden unter einer Stickstoffatmosphäre 900 g handelsübliches Kolophonium, 63 g Nonylphenol, 116 g Diphenylolpropan und 83 g Glycerin geschmolzen. In die 100 °C heiße Schmelze werden sodann 6,5 g Lithiumhydroxid und anschließend 78 g Paraformaldehyd eingetragen. Dann wird die Mischung unter Rühren 30 min homogenisiert. Danach wird das Gefäß druckdicht verschlossen und die Heizung auf eine Temperatur von 150 °C geregelt, so daß sich ein Druck von 2 bar aufbaut. Nach 2 Stunden wird mit Stickstoff belüftet und über einen aufgesetzten Kühler bereits Wasser abdestilliert. Dann wird der Kühler mit einem Azeotropwasserabscheider kombiniert und Wasser im Umlauf mit Xylol abdestilliert. Dabei wird die Temperatur kontinuierlich auf 250 °C gesteigert, so daß Wasser ständig als Azeotrop mit Xylol abdestilliert. Der Fortgang der Reaktion wird anhand der Säurezahl des Produkts bestimmt. Sobald diese auf 25 mg KOH/g Harz gefallen ist, ist die Wasserabspaltung weitgehend beendet. Das in der Schmelze befindliche Lösungsmittel wird zunächst unter Normaldruck während 30 min abdestilliert. Flüchtige Anteile werden im Vakuum innerhalb von 10 min bei 100 mbar abdestilliert. Nach Druckausgleich mit Stickstoff wird die Schmelze entleert, die nach dem Abkühlen 1060 g eines spröden, pulverisierbaren Harzes mit einem Erweichungspunkt von 145 °C ergibt. Eine 25 %ige Lösung in Toluol weist bei 23 °C eine Viskosität von 21 mPa·s auf. Durch Gelpermeationschromatographie wird ein mittleres Molekulargewicht von 105000 ermittelt. Die Reaktionszeit zur Herstellung beträgt 9 Stunden.

### Beispiel 6

Herstellung eines mit Styrol modifizierten Phenolharz-modifizierten Naturharzsäureesters

Man verfährt wie in Beispiel 1 angegeben mit der Abänderung, daß zusätzlich zum Maleinsäureanhydrid 10 g Styrol zugegeben werden. Das erhaltene Harz hat einen Erweichungspunkt von 143 °C und die 25 %ige Lösung in Toluol bei 23 °C eine Viskosität von 5 mPa·s.

### Beispiel 7

Herstellung eines mit einem Kohlenwasserstoffharz modifizierten Phenolharz-modifizierten Naturharzsäureesters unter Azeotropdestillation des Reaktionswassers

Man verfährt wie in Beispiel 3 angeben mit der Abänderung, daß dem Kolophonium noch 25 g eines handelsüblichen Kohlenwasserstoffharzes (Jodzahl 121 g Jod/100 g Harz) zugefügt werden.

Die Ausbeute beträgt 1083 g. Das erhaltene Harz hat einen Erweichungspunkt von 148 °C, ein mittleres Molekulargewicht von 110.000. Eine 25 %ige Lösung des Harzes in Toluol besitzt bei 23 °C eine Viskosität von 25 mPa·s.

### Beispiel 8

Herstellung eines mit Maleinsäureanhydrid, einem Kohlenwasserstoffharz und einem vegetabilen Öl modifizierten Phenolharz-modifizierten Naturharzsäureesters unter kontinuierlicher Azeotropdestillation des Reaktionswassers

In einem heizbaren 2I-Mehrhalskolben mit Rührwerk, Thermometer, Tropftrichter, Destillationsvorrichtung und Einfüllrohr werden unter einer Stickstoffatmosphäre 967 g handelsübliches Kolophonium, 48 g Maleinsäureanhydrid, 30 g eines handelsüblichen Kohlenwasserstoffharzes (Jodzahl 121 g Jod/100 g Harz) und 20 g hydriertes Kokosfett eine Stunde bei 160 °C erhitzt. Dann werden bei dieser Temperatur 5 g Lithiumhydroxid, 133 g Pentaerythrit und 16 g Glycerin zugegeben. Sodann werden 121 g eines wäßrigen Phenol-Formaldehyd-Kondensationsprodukts (70 %ig in Wasser, Viskosität 350 mPa·s) innerhalb von einer Stunde zugetropft unter abdestillieren von Wasser. Dann wird auf 255 °C erhitzt, unter ständigem Abdestillieren von Wasser. Sobald die Säurezahl unter 35 mg KOH/g Harz gesunken ist, wird der Ansatz 30 Minuten bei 100 mbar evakuiert. Nach Aufheben des Vakuums mit Stickstoff werden 1156 g eines spröden, pulverisierbaren Harzes mit einem Erweichungspunkt 146 °C erhalten. Eine 25 %ige Lösung in Toluol besitzt bei 23 °C eine Viskosität von 5 mPa·s. Durch Gelpermeationschromatographie wird ein mittleres Molekulargewicht von 5500 ermittelt. Die Reaktionszeit zur Herstellung beträgt 14 Stunden.

### Beispiel 9

Einfluß der Lithiumhydroxid-Konzentration

In einem heizbaren 2I-Mehrhalskolben mit Rührwerk, Thermometer, Tropftrichter, Rückflußkühler und Einfüllrohr werden unter Stickstoffatmosphäre 967 g handelsübliches Kolophonium und 63 g Maleinsäureanhydrid eine Stunde bei 160 °C erhitzt. Dann werden bei dieser Temperatur 2,5 g Lithiumhydroxid, 133 g Pentaerythrit, und 16 g Glycerin zugegeben. Sodann werden 80 g eines wäßrigen Phenol-Formaldehyd-Kondensationsprodukts (70 %ig in Wasser, Viskosität 350 mPa·s sowie 77 g eines wäßrigen p-t-Butylphenol-Formaldehyd-Kondendationsproduktes (65 %ig in Wasser, Viskosität 250 mPa·s) innerhalb einer Stunde zugetropft. Dabei wird der Rückflußkühler durch einen absteigenden Kühler ersetzt und Wasser abdestilliert. Dann wird auf 225 °C erhitzt unter ständiger Destillation von Wasser. Sobald die Säurezahl unter 35 mg KOH/g Harz gesunken ist, wird der Ansatz 30 Minuten bei 100 mbar evakuiert. Nach Aufheben des Vakuums mit Stickstoff werden 112 6 g eines spröden, pulverisierbaren Harzes mit dem Erweichungspunkt 146 °C erhalten. Eine 25 %ige Lösung in Toluol besitzt bei 23 °C eine Viskosität von 20 mPa·s und eine 50 %ige Lösung in Toluol eine Viskosität von 4800 mPa·s.

### Beispiel 10

Einfluß der Lithiumhydroxid-Konzentration

Man verfährt, wie in Beispiel 9 angegeben, mit der Abänderung, daß 5 g Lithiumhydroxid eingesetzt werden. Eine 25 %ige Lösung des resultierenden Harzes besitzt bei 23 °C eine Viskosität von 45 mPa·s und eine 50 %ige Lösung in Toluol eine Viskosität von 9300 mPa·s.

### Vergleichsbeispiel 2

Herstellung eines mit Magnesiumoxid und Lithiumcarbonat modifizierten Harzes gemäß CN-A 1 077 461

600 g handelsübliches Kolophonium, 85 g Phenol, 95 g Formaldehyd, 1 g Lithiumcarbonat und 2 g Magnesiumoxid werden 3 Stunden unter Rückfluß erhitzt. Dann wird der Rückflußkühler durch einen absteigenden Kühler ersetzt, unter Destillation von Wasser auf 220 °C erhitzt, 58 g Glycerin zugefügt, 4 Stunden bei 270 °C gehalten und schließlich zur Entfernung flüchtiger Anteile noch 1 Stunde bei 100 mbar evakuiert. Nach Abkühlen wird ein Harz erhalten, das als 25 %ige Lösung in Toluol eine Viskosität von 3 mPa·s aufweist.

### Herstellung von Pigmentkonzentraten

Nach üblichen Methoden werden jeweils aus dem Bindemittelharz des Beispiels 5 (Viskosität 25 %ig in Toluol: 21 mPa·s/23 °C, Viskosität 50 %ig in Toluol: 6400 mPa·s/23 °C) und aus dem in Beispiel 1 der deutschen Patentanmeldung P 43 08 108.8 beschriebenen Harz (Viskosität 25 %ig in Toluol: 30 mPa·s/23 °C, Viskosität 50 %ig in Toluol: 182000 mPa·s/23 °C) sowie dem Bindemittelharz des Vergleichsbeispiels 2 (Viskosität 25 %ig in Toluol: 3 mPa·s/23 °C) durch halbstündiges Dispergieren in der Kugelmühle aus
34 Gew.-% Bindemittelharz
13 Gew.-% ®Litholrubin (Rotpigment, Hersteller BASF AG)
53 Gew.-% Toluol

Pigmentkonzentrate für den Illustrationstiefdruck mit Toluol hergestellt. Während die mit dem erfindungsgemäßen Bindemittelharz formulierte Anreibung homogen ist und problemlos aus der Kugelmühle ausgegossen werden kann, ist die mit dem Vergleichsharz aus P 43 08 108.8 formulierte Anreibung nicht mehr fließfähig und zudem inhomogen. Die mit dem Bindemittelharz des Vergleichsbeispiels 2 formulierte Farbe ist instabil, so daß es zur Trennung von Pigment und Bindemittel kommt.

### Anwendungstechnischer Vergleich

Nach üblichen Verfahren werden jeweils aus dem Bindemittelharz des Beispiels 1 (Farbe A) und zwei handelsüblichen Phenolharz-modifizierten Naturharzsäureestern
- Vergleichsharz 1:: Zinkgehalt, bestimmt als ZnO, 4,5 Gew.-%, Viskosität (25 %ig in Toluol) bei 23 °C 4,5 mPa·s (Farbe B),
- Vergleichsharz 2:: Zinkgehalt, bestimmt als ZnO, 2,5 Gew.-%, Calciumgehalt, bestimmt als CaO, 1,3 Gew.-%, Viskosität (25 %ig in Toluol) bei 23 °C 4 mPa·s (Farbe C)
durch Dispergieren einer Mischung von
24 g Bindemittelharz
9 g Pigment Litholrubin
67 g Toluol

Farben für den Illustrationstiefdruck hergestellt und im Tiefdruckverfahren Papier bedruckt.

Der Glanz der Andrucke, der für ein gutes drucktechnisches Ergebnis möglichst hoch sein sollte, wird sodann mit dem Laborreflektometer nach Lange bei einem Einstrahlwinkel von 60° gemessen.

Das Durchschlagen der Farben auf die Rückseite des Bedruckstoffs, das für ein gutes drucktechnisches Verhalten möglichst schwach sein sollte, wird visuell beurteilt. Die mit dem erfindungsgemäßen Harz formulierte Farbe ergibt deutlich glänzendere Andrucke als die mit den Harzen des Standes der Technik formulierten Farben.

| | | | |
|---|---|---|---|
| Farbe | A | B | C |
| Glanz [%] | 57 | 46 | 42 |
| Durchschlagen | schwach | mittel | schwach |

Durch Dispergieren von
18 g Bindemittelharz des Beispiels 3
9 g Pigment Litholrubin
73 g Toluol
wird eine harzarme Farbe D hergestellt und mit der harzreichen Farbe B verglichen. Es wird trotz des um 25 Gew.-% reduzierten Harzanteils ein ähnlich gutes drucktechnisches Ergebnis erhalten.

| | | |
|---|---|---|
| Farbe | D | B |
| Glanz[%] | 47 | 46 |
| Durchschlagen | mittel | mittel |

Nach üblichen Verfahren werden jeweils aus dem Bindemittelharz des Beispiels 1 (Farbe E) und einem handelsüblichen Resinat Vergleichsharz 3: Calciumgehalt, bestimmt als CaO, 4,5 Gew.-%, Viskosität (25 %ig in Toluol) bei 23 °C 2,5 mPa·s (Farbe F) durch Dispergieren einer Mischung von
24 g Bindemittelharz
9 g Pigment ®Permanentgelb DHG N 22 (Gelbpigment, Hersteller Hoechst AG)
67 g Toluol
Gelbfarben für den Illustrationstiefdruck mit Toluol hergestellt und im Tiefdruckverfahren Papier bedruckt.

Die mit dem erfindungsgemäßen Harz formulierte Farbe ergibt einen deutlich glänzenderen Andruck als die mit dem Resinat formulierte Farbe.

| | | |
|---|---|---|
| Farbe | E | F |
| Glanz [%] | 54 | 46 |
| Durchschlagen | schwach | mittel |

## Patentansprüche

1. Toluol-lösliche modifizierte Naturharzsäureester, herstellbar durch Umsetzung von mindestens jeweils einer Verbindung aus den Substanzgruppen
A) Naturharze und Naturharzsäuren,
B) einkernige und mehrkernige Phenole, die gegenüber Oxoverbindungen mehrfachfunktionell sind,
C) Aldehyde und Aldehydacetale,
D) Alkohole mit mindestens zwei Hydroxylgruppen
sowie gegebenenfalls von weiteren Verbindungen aus den Substanzgruppen
E) α,β-ethylenisch ungesättigte Carbonsäuren und deren Anhydride,
F) Fettsäuren und Fettsäureester,
G) ethylenisch ungesättigte Monomere,
H) ethylenisch ungesättigte Kohlenwasserstoffharze
in Gegenwart von
l) Lithiumverbindungen
bei einer Temperatur von 100 bis 300 °C unter Wasserabspaltung.

2. Modifizierte Naturharzsäureester nach Anspruch 1, dadurch gekennzeichnet, daß sie ein mittleres Molekulargewicht (Gewichtsmittel M_{w}) im Bereich zwischen 5000 und 150000 aufweisen.

3. Modifizierte Naturharzsäureester nach Anspruch 1, dadurch gekennzeichnet, daß 25 Gew.-%ige Lösungen der modifizierten Naturharzsäureester in Toluol bei 23 °C eine Viskosität zwischen 3 und 100 mPa·s aufweisen.

4. Verfahren zur Herstellung von modifizierten Naturharzsäureestern nach Anspruch 1 durch Umsetzung von
30 bis 95 Gew.-% Naturharze oder Naturharzsäuren aus der Substanzgruppe A),
1 bis 45 Gew.-% phenolische Komponenten aus der Substanzgruppe B),
1 bis 20 Gew.-% Aldehyde oder Aldehydacetale aus der Substanzgruppe C),
oder anstelle der Komponenten aus den Substanzgruppen B) und C) oder anteilig mit diesen aus Verbindungen der Substanzgruppen B) und C) separat hergestellte Kondensationsprodukte,
1 bis 20 Gew.-% Polyolkomponenten aus der Substanzgruppe D),
0 bis 20 Gew.-% αβethylenisch ungesättigte Carbonsäuren oder deren Anhydride aus der Substanzgruppe E),
0 bis 40 Gew.-% Fettsäuren oder Fettsäureester aus der Substanzgruppe F),
0 bis 30 Gew.-% ethylenisch ungesättigte Monomere aus der Substanzgruppe G),
0 bis 30 Gew.-% ethylenisch ungesättigte Kohlenwasserstoffharze aus der Substanzgruppe H),
0,01 bis 5 Gew.-% Lithiumverbindungen, berechnet als LiOH, aus der Substanzgruppe l),
jeweils bezogen auf die Gesamtmenge der eingesetzten Komponenten.

5. Verfahren zur Herstellung von modifizierten Naturharzsäureestern, nach Anspruch 4, dadurch gekennzeichnet, daß das Reaktionswasser im Temperaturbereich von 220 bis 270 °C unter reduziertem Druck von 0,1 bis 1000 mbar oder mit einem Schleppmittel, das zur Azeotropdestillation mit Wasser befähigt ist, abdestilliert wird.

6. Verwendung der modifizierten Naturharzsäureester nach Anspruch 1 in Pigmentanreibungen oder Pigmentkonzentraten.

7. Verwendung der modifizierten Naturharzsäureester nach Anspruch 1 in Druckfarben.

8. Verwendung der modifizierten Naturharzsäureester nach Anspruch 1 als Bindemittel für den Illustrationstiefdruck.

## Claims

1. A toluene-soluble modified natural resin ester which can be prepared by reacting at least one compound selected from each of the substance groups
A) natural resins and natural resin acids,
B) monocyclic and polycyclic phenols which are polyfunctional towards oxo compounds,
C) aldehydes and aldehyde acetals,
D) alcohols having at least two hydroxyl groups and, if desired, further compounds selected from the substance groups
E) α,β-ethylenically unsaturated carboxylic acids and their anhydrides,
F) fatty acids and fatty acid esters,
G) ethylenically unsaturated monomers,
H) ethylenically unsaturated hydrocarbon resins in the presence of
I) lithium compounds at a temperature of from 100 to 300°C with elimination of water.

2. A modified natural resin ester as claimed in claim 1, which has an average molecular weight (weight average M_{w}) in the range between 5000 and 150,000.

3. A modified natural resin ester as claimed in claim 1, where a 25% strength by weight solution of the modified natural resin ester in toluene has a viscosity between 3 and 100 mPa·s at 23°C.

4. A process for preparing a modified natural resin ester as claimed in claim 1 by reacting from 30 to 95% by weight of natural resins or natural resin acids selected from the substance group A),
from 1 to 45% by weight of phenolic components selected from the substance group B),
from 1 to 20% by weight of aldehydes or aldehyde acetals selected from the substance group C),
or, in place of the components selected from the substance groups B) and C) or as a proportion of these, condensation products separately prepared from compounds of the substance groups B) and C), from 1 to 20% by weight of polyol components selected from the substance group D),
from 0 to 20% by weight of α,β-ethylenically unsaturated carboxylic acids or their anhydrides selected from the substance group E),
from 0 to 40% by weight of fatty acids or fatty acid esters selected from the substance group F), from 0 to 30% by weight of ethylenically unsaturated monomers selected from the substance group G),
from 0 to 30% by weight of ethylenically unsaturated hydrocarbon resins selected from the substance group H), and from 0.01 to 5% by weight of lithium compounds, calculated as LiOH, selected from the substance group I),
in each case based on the total amount of the components used.

5. The process for preparing a modified natural resin ester as claimed in claim 4, wherein the water of reaction is distilled off in the temperature range from 220 to 270°C under a reduced pressure of from 0.1 to 1000 mbar or using an entrainer which is capable of azeotropic distillation with water.

6. Use of the modified natural resin ester as claimed in claim 1 in ground pigments or pigment concentrates.

7. Use of the modified natural resin ester as claimed in claim 1 in printing inks.

8. Use of the modified natural resin ester as claimed in claim 1 as binder for halftone gravure printing.

## Revendications

1. Esters d'acides résiniques naturels modifiés, solubles dans le toluène, pouvant être préparés en faisant réagir respectivement au moins un composé choisi dans les groupes de substances suivants :
A) résines naturelles et acides résiniques naturels,
B) phénols mononucléaires ou polynucléaires qui sont multifonctionnels vis-à-vis des composés oxo,
C) aldéhydes et acétals d'aldéhydes,
D) alcools possédant au moins deux groupes hydroxyle,
ainsi le cas échéant que d'autres composés choisis dans les groupes de substances suivants :
E) acides carboxyliques α,β-éthyléniquement insaturés et leurs anhydrides,
F) acides gras et esters d'acides gras,
G) monomères éthyléniquement insaturés,
H) résines d'hydrocarbures éthyléniquement insaturées,
en présence de
I) composés de lithium
à une température de 100 à 300°C avec déshydratation.

2. Esters d'acides résiniques naturels modifiés selon la revendication 1, caractérisés en ce qu'ils présentent un poids moléculaire moyen (moyenne pondérale M_{W}) dans la plage entre 5000 et 150000.

3. Esters d'acides résiniques naturels modifiés selon la revendication 1, caractérisés en ce que des solutions à 25% en poids des esters d'acides résiniques naturels modifiés dans le toluène à 23°C présentent une viscosité entre 3 et 100 mPa·s.

4. Procédé de préparation d'esters d'acides résiniques naturels, modifiés selon la revendication 1 en faisant réagir :
30 à 95 % en poids de résines naturelles ou d'acides résiniques naturels du groupe de substances A),
1 à 45 % en poids de composants phénoliques du groupe substances B),
1 à 20 % en poids d'aldéhydes ou d'acétals d'aldéhydes du groupe de substances C),
ou, à la place des composants des groupes de substances B) et C) ou bien en proportion de ceux-ci, des produits de condensation préparés séparément à partir de composés des groupes de substances B) et C),
1 à 20 % en poids de composants polyols du groupe de substances D),
0 à 20 % en poids d'acides carboxyliques α, β-éthyléniquement insaturés ou de leurs anhydrides du groupe de substances E),
0 à 40 % en poids d'acides gras ou d'esters d'acides gras du groupe de substances F),
0 à 30 % en poids de monomères éthyléniquement insaturés du groupe de substances G),
0 à 30 % en poids de résines d'hydrocarbures éthyléniquement insaturées du groupe de substances H), 0,01 à 5 % en poids de composés de lithium, calculés en LiOH, du groupe de substances I),
ramenés à chaque fois à la quantité totale des composants mis en oeuvre.

5. Procédé de préparation d'esters d'acides résiniques naturels, modifiés selon la revendication 4, caractérisé en ce que l'eau de la réaction est éliminée par distillation dans une plage de température de 220 à 270°C sous une pression réduite de 0,1 à 1000 mbar ou bien à l'aide d'un agent d'entraînement qui est apte à la distillation azéotrope avec l'eau.

6. Utilisation des esters d'acides résiniques naturels, modifiés selon la revendication 1 dans des broyats de pigments ou des concentrés de pigments.

7. Utilisation des esters d'acides résiniques naturels, modifiés selon la revendication 1 dans des encres d'imprimerie.

8. Utilisation des esters d'acides résiniques naturels, modifiés selon la revendication 1 comme liants pour l'impression d'illustrations par héliogravure.
